# EUROPÄISCHE PATENTANMELDUNG

(11) **EP 3 522 341 A1**
(43) Veröffentlichungstag der Anmeldung: **07.08.2019**
(21) Anmeldenummer: 18155387.6
(22) Anmeldetag: 06.02.2018
(51) Int. Cl.: H02K 5/20, H02K 7/14, H02K 11/33, B64D 33/08, B64D 27/24, H02K 9/06

(54) **ELEKTRISCHER ANTRIEB MIT EINER LEISTUNGSELEKTRONISCHEN SCHALTUNG**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft einen elektrischen Antrieb mit einer leistungselektronischen Schaltung (42), an die eine elektrische Maschine (111) angeschlossen ist. Der elektrische Antrieb weist eine Gehäusestruktur (112) auf, in der eine Kühlkanalstruktur (114) ausgebildet ist. Erfindungsgemäß ist vorgesehen, dass die leistungselektronische Schaltung (42) aus mehreren Leistungsmodulen (11) besteht und so gleichmäßig in der Kühlkanalstruktur (114) verteilt werden kann. Dadurch ist eine effektive Kühlung insbesondere durch Kühlluft möglich, ohne dass eine technisch aufwendige und zusätzliches Bauteilgewicht erzeugende Flüssigkeitskühlung zum Einsatz kommen muss. Insbesondere elektrische Antriebe für Flugzeuge, wie Propellermotoren mit einem Propeller (119), können mit dem elektrischen Antrieb ausgestattet werden. Diese sind zuverlässig im Betrieb und weisen dabei ein geringes Bauteilgewicht auf.

## Beschreibung

Die Erfindung betrifft einen elektrischen Antrieb mit einer leistungselektronischen Schaltung, an die eine elektrische Maschine, die den Antrieb gewährleistet, angeschlossen ist. Der Antrieb weist auch eine Gehäusestruktur auf, in der eine Kühlkanalstruktur ausgebildet ist. Diese Kühlkanalstruktur kann gemäß dem Stand der Technik verwendet werden, um die elektrische Maschine zu kühlen, die während ihres Betriebs aufgrund von Verlusten Wärme produziert.

Elektrische Antriebe werden für unterschiedlichste Antriebsaufgaben verwendet. Es ist sowohl ein stationärer als auch ein mobiler Betrieb möglich. Insbesondere bei der Verwendung von elektrischen Antrieben in Fahrzeugen oder Flugzeugen, also beim mobilen Betrieb, ist ein wesentliches Optimierungsziel bei der Entwicklung, dass der elektrische Antrieb möglichst leicht sein soll. Daraus ergibt sich der Wunsch einer möglichst großen Leistungsdichte des elektrischen Antriebs, also einer möglichst hohen Antriebsleistung bezogen auf das Gewicht des elektrischen Antriebs.

Eine Erhöhung der Leistungsdichte führt üblicherweise zu kompakteren Konfigurationen des elektrischen Antriebs, weswegen gleichzeitig die Möglichkeiten einer Kühlung verringert werden. Dies kann die Notwendigkeit einer Verwendung von flüssigen Kühlmedien zur Folge haben, wobei der mit der Flüssigkeitskühlung verbundene zusätzliche Aufwand zu einem gewissen Mehrgewicht führt, welches die Gewichtsersparnis aufgrund der höheren Leistungsdichte zumindest teilweise wieder aufhebt. Außerdem bedeuten zusätzliche Komponenten auch immer einen höheren Wartungsaufwand und erhöhen auch das Risiko von Fehlfunktionen.

Die Aufgabe der Erfindung liegt daher darin, einen elektrischen Antrieb mit einer leistungselektronischen Schaltung anzugeben, mit dem eine vergleichsweise hohe Leistungsdichte mit einem vergleichsweise geringen konstruktiven Aufwand für die Kühlung verwirklicht werden kann.

Diese Aufgabe wird mit dem eingangs angegebenen elektrischen Antrieb erfindungsgemäß dadurch gelöst, dass die leistungselektronische Schaltung mehrere Leistungsmodule aufweist, welche in der Kühlkanalstruktur umströmbar für ein in der Kühlkanalstruktur zu führendes Kühlmedium angeordnet sind. Dadurch, dass die leistungselektronische Schaltung mehrere Leistungsmodule aufweist, ist es möglich, die Oberfläche für eine Kühlung der leistungselektronischen Schaltung zu vergrößern. Daher reicht es aus, die leistungselektronische Schaltung in einer Kühlkanalstruktur umströmbar anzuordnen, so dass das Kühlmedium, welches vorzugsweise Luft ist, die Leistungsmodule überstreicht. Eine aufwendige Flüssigkeitskühlung, die überdies störanfälliger ist, kann dadurch eingespart werden. Hierdurch lässt sich vorteilhaft die Leistungsdichte des elektrischen Antriebs verbessern, da der Aufwand für eine Kühlung des elektrischen Antriebs bei der Betrachtung der erreichbaren Leistungsdichte zu berücksichtigen ist.

Wird der elektrische Antrieb beispielsweise in einem Flugzeug verbaut, so ist es für das Gesamtgewicht des Flugzeugs von besonderem Vorteil, wenn das Gewicht der Kühlkomponenten möglichst gering ist. Gleichzeitig steht wegen der hohen Geschwindigkeit von Flugzeugen die Umgebungsluft als Kühlmedium zur Verfügung, wobei diese mit vergleichsweise hohen Flussgeschwindigkeiten durch die Kühlkanalstruktur geleitet werden kann. Zu diesem Zweck wird die Kühlkanalstruktur offen für die Umgebungsluft ausgestaltet.

Der elektrische Antrieb eignet sich daher gemäß einer Ausgestaltung der Erfindung als Propellermotor. Die Kühlkanalstruktur kann gemäß einer Ausgestaltung der Erfindung in einem Propellerstrahl eines durch die elektrische Maschine angetriebenen Propellers angeordnet sein. Der Ausdruck "Propeller" ist diesbezüglich im weitesten Sinne zu verstehen. Bei dem Propeller kann es sich beispielsweise um den Antriebspropeller für ein Flugzeug handeln. Als Propeller kann aber auch ein Lüfterrad für eine elektrische Maschine verstanden werden, welches auf der Antriebswelle der elektrischen Maschine installiert ist und durch dessen Drehung eine Kühlung der elektrischen Maschine und insbesondere auch der leistungselektronischen Schaltung in dem Kühlkanal erfolgen kann.

Die Kühlkanalstruktur kann neben der Kühlung der leistungselektronischen Schaltung auch die Aufgabe einer Kühlung der elektrischen Maschine übernehmen. Dies kann gemäß einer weiteren Ausgestaltung der Erfindung insbesondere dadurch erreicht werden, dass die Kühlkanalstruktur ringförmig mit einer inneren Wand und einer äußeren Wand ausgebildet ist und um die elektrische Maschine herum angeordnet ist. Die innere Wand und die äußere Wand begrenzen damit die Kühlkanalstruktur jeweils nach innen bzw. nach außen, sind als solche also als Innenwände (oder genauer Innenwandflächen) der Kanalstruktur aufzufassen. Die Begriffe "innere" und "äußere" bestimmen demnach die Lage der Wände zueinander. Jenseits der inneren Wand befindet sich die elektrische Maschine, deren Wärmeabgabe über die innere Wand durch das strömende Kühlmedium aufgenommen werden kann.

Gemäß einer anderen Ausgestaltung der Erfindung ist vorgesehen, dass zwischen der elektrischen Maschine und der ringförmigen Kanalstruktur mindestens ein zusätzlicher Kühlkanal für die Kühlung der elektrischen Maschine vorgesehen ist. Dieser Kühlkanal befindet sich vorzugsweise als innerer ringförmiger Kühlkanal innerhalb der ringförmigen Kühlkanalstruktur, in der die leistungselektronische Schaltung untergebracht ist. Hierdurch ist es möglich, für die elektrische Maschine eine gesonderte Kühlung vorzunehmen. Beispielsweise ist es möglich, für die elektrische Maschine eine Flüssigkeitskühlung vorzusehen, während die leistungselektronische Schaltung in der ringförmigen Kühlkanalstruktur beispielsweise durch die Umgebungsluft umströmt wird. Selbstverständlich ist es auch möglich, den zusätzlichen Kühlkanal mit Luft zu durchströmen, wobei der Vorteil entsteht, dass eine vergrößerte Oberfläche für die Abgabe von Wärme zur Verfügung steht. Die Kühlkanalstruktur sowie der zusätzliche Kühlkanal können jeweils bezüglich des Kühlungsbedarfs für die leistungselektronische Schaltung und des Kühlungsbedarfs für die elektrische Maschine getrennt ausgelegt werden.

Gemäß einer besondere Ausgestaltung der Erfindung ist vorgesehen, dass die innere Wand und/oder die äußere Wand der ringförmigen Kühlkanalstruktur ebene Aufnahmeflächen aufweisen und die Leistungsmodule auf diesen Aufnahmeflächen angeordnet sind. Hierdurch ist es vorteilhaft möglich, die Leistungsmodule kostengünstig mit geläufigen Verfahren der Oberflächenmontage auf die ebene Aufnahmefläche aufzusetzen. Hierbei kann die innere Wand selbst als Schaltungsträger für die leistungselektronische Schaltung dienen. Besonders vorteilhaft ist es aber, wenn die Leistungsmodule auf einen Basisschaltungsträger aufgesetzt werden, auf dem die leistungselektronische Schaltung aufgebaut wird. Die auf dem Basisschaltungsträger montierten Leistungsmodule können dann als Baueinheit in der Kühlkanalstruktur montiert werden, wobei der Basisschaltungsträger hierbei auf die ebene Aufnahmefläche in der Kühlkanalstruktur aufgesetzt wird. Hier kann vorteilhaft zusätzlich ein Wärmeübertragungsmedium zum Einsatz kommen, um eine Abgabe von Wärme nicht nur über das die Leistungsmodule umströmende Kühlmedium zu erreichen, sondern auch durch eine Ableitung in die innere und/oder äußere Wand der Kühlkanalstruktur. Dies ist von besonderem Vorteil, wenn die innere Wand die ringförmige Kühlkanalstruktur von dem zusätzlichen Kühlkanal abtrennt, so dass die durch die innere Wand abgeführte Wärme auch durch das in dem inneren Kühlkanal strömende Kühlmedium aufgenommen werden kann.

Eine weitere Ausgestaltung der Erfindung sieht vor, dass die innere Wand und/oder die äußere Wand im Querschnitt ein die Aufnahmefläche bildendes Polygon bildet. Insbesondere kann dieses Polygon ein regelmäßiges Sechseck sein. Im Inneren dieses Polygons (wenn es sich um die innere Wand handelt) kann die zentralsymmetrische elektrische Maschine angeordnet werden, wobei sich hierbei eine gute Platzausnutzung ergibt. Der verbleibende Freiraum kann insbesondere als zusätzlicher Kühlkanal verwendet werden. Vorteilhaft bietet das Polygon gleich mehrere ebene Aufnahmeflächen für die Leistungsmodule, so dass vorteilhaft eine sehr platzsparende Anordnung der Leistungsmodule möglich ist.

Eine wieder andere Ausgestaltung der Erfindung sieht vor, dass die ringförmige Kanalstruktur mit radialen Rippen ausgestattet ist, auf denen die Leistungsmodule angeordnet sind. Auch diese Rippen können vorteilhaft eine ebene Aufnahmefläche auf beiden Seiten zur Unterbringung der Leistungsmodule zur Verfügung stellen. Gleichzeitig versteifen die Rippen vorteilhaft den ringförmigen Kühlkanal, wenn diese die innere Wand mit der äußeren Wand verbinden. Wenn diese genau radial nach außen ausgerichtet sind, ergeben sich gemäß einer besonderen Ausgestaltung der Erfindung Kühlkanäle mit Querschnitten in Form von Kreisringsegmenten, in denen die Leistungsmodule angeordnet werden können. Zusätzlich kann insbesondere die innere Wand des ringförmigen Kühlkanals weitere Rippen aufweisen, die eine Wärmeabgabe von der elektrischen Maschine ermöglichen. An diesen Rippen sind dann keine Leistungsmodule befestigt.

Eine weitere Ausführungsform der Erfindung wird erhalten, wenn der Kühlkanal ein an sich in Strömungsrichtung des Kühlfluids verjüngenden Kanalquerschnitt aufweist. Hierdurch kann die Menge des Kühlfluids, das in die Kühlkanalstruktur eindringt, vorteilhaft vergrößert werden. Gleichzeitig lässt sich vorteilhaft eine gleichmäßigere Kühlung der Leistungsmodule verwirklichen. Dies wird dadurch erreicht, dass in dem größeren Querschnitt am Eingangs der Kühlkanalstruktur das Kühlfluid teilweise an den Leistungsmodulen vorbeiströmt, ohne diese zu kühlen, da das Kühlfluid von den Leistungsmodulen einen zu großen Abstand aufweist. Dieses Kühlfluid wird durch die Verjüngung des Querschnitts der Kühlkanalstruktur jedoch gezwungen, im weiteren Verlauf der Kühlkanalstruktur die dort befindlichen Leistungsmodule zu kühlen, wodurch eine gleichmäßigere Kühlung der Leistungsmodule erreicht wird.

Weitere Möglichkeiten, die Kühlung der Leistungsmodule in der Kühlkanalstruktur zu beeinflussen, bestehen darin, das Raster der Anordnung der Leistungsmodule zu verändern. Mit dem Raster der Anordnung ist ein Muster gemeint, nach welchem die Leistungsmodule regelmäßig angeordnet sind. Beispielsweise kann dieses Raster aus Rechtecken bestehen. Es ist nun möglich, die Leistungsmodule im weiteren Verlauf der Kühlkanalstruktur weniger dicht anzuordnen, so dass das wärme Kühlfluid die Möglichkeit einer besseren Kühlung hat, wodurch der Effekt einer Erwärmung des Kühlmediums ausgeglichen wird.

Die leistungselektronischen Bauelemente sind vorzugsweise als Nacktchip ausgeführt. Dieser lässt sich direkt mit der Substratplatte kontaktieren, beispielsweise durch eine Sinterverbindung, die auch einen elektrischen Kontakt gewährleistet. Die Substratplatte kann vorzugsweise aus einer Keramik hergestellt sein. Diese leitet den elektrischen Strom nicht, so dass gleichzeitig eine elektrische Isolation gewährleistet ist. Daher kann eine elektronische Schaltung durch Strukturieren einer elektrisch leitenden Beschichtung auf der Substratplatte realisiert werden. Hierdurch werden beispielsweise Kontaktflächen zur Kontaktierung der leistungselektronischen Bauelemente zur Verfügung gestellt.

Die erfindungsgemäße Ausbildung der Leistungsmodule hat den Vorteil, dass diese mit vergleichsweise geringem Aufwand bei der Konzipierung und bei der Montage auf dem Basisschaltungsträger zu verschiedenen Konfigurationen kombiniert werden können, um leistungselektronische Schaltungen mit unterschiedlichen Anforderungen zu realisieren. Der Basisschaltungsträger kann dabei beispielsweise als Leiterplatte ausgebildet sein, wobei eine Schaltung auf der Oberfläche zur Kontaktierung mit den verwendeten Leistungsmodulen vorgesehen sein kann. Der Basisschaltungsträger kann beispielsweise aber auch aus einem Gehäuseteil oder dergleichen bestehen, wobei das Gehäuse dann gleichzeitig als Tragkörper zur Ausbildung der leistungselektronischen Schaltung dient.
Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. DesWeiteren sind die beschriebenen Ausführungsformen auch durch weitere der bereits beschriebenen Merkmale der Erfindung ergänzbar.

Es zeigen:
- Figur 1: ein Leistungsmodul in dreidimensionaler Ansicht, teilweise aufgeschnitten, wie es in einem Ausführungsbeispiel des erfindungsgemäßen elektrischen Antriebs zum Einsatz kommen kann,
- Figur 2: das Detail II gemäß Figur 1, teilweise aufgeschnitten,
- Figur 3: eine leistungselektronische Schaltung mit einer Vielzahl von Leistungsmodulen, die gemäß Figur 1 oder ähnlich aufgebaut sein können, als Aufsicht, wobei die leistungselektronische Schaltung in einem Ausführungsbeispiel des erfindungsgemäßen elektrischen Antriebs zum Einsatz kommen kann,
- Figur 4: schematisch einen Schaltplan für eine Kontaktierung von Leistungsmodulen gemäß Figur 1 in einer leistungselektronische Schaltung gemäß Figur 3,
- Figur 5: ein Ausführungsbeispiel des erfindungsgemäßen Antriebs als Ansicht von vorne, wobei der elektrische Antrieb als Propellermotor ausgeführt ist, und
- Figur 6: ein Ausführungsbeispiel des erfindungsgemäßen Antriebs ausgeführt als elektrische Maschine mit Lüfterrad im Querschnitt.

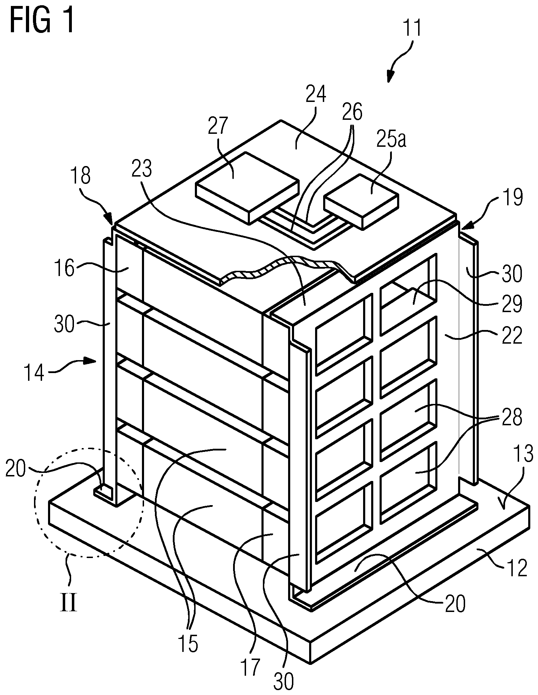

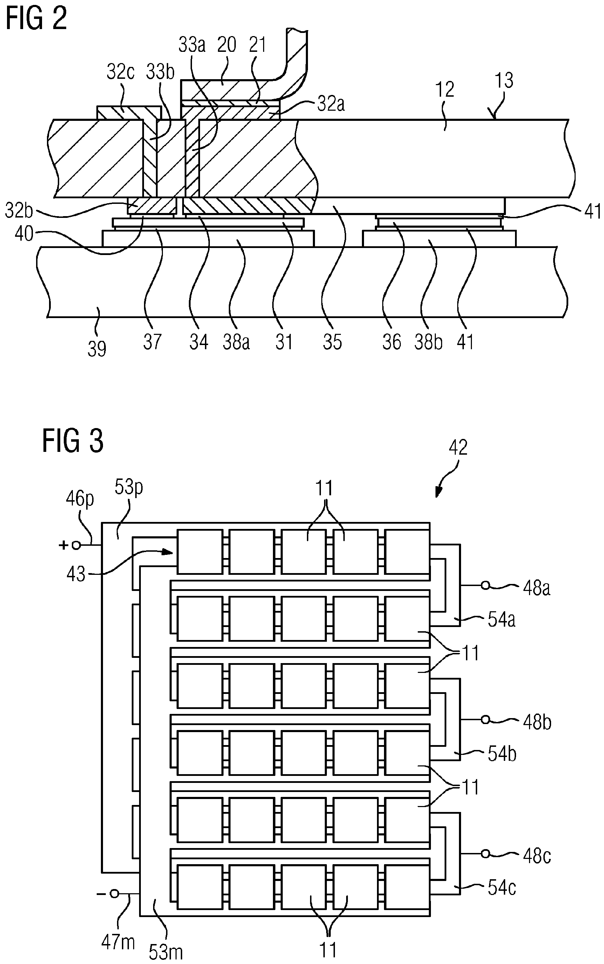

Ein Leistungsmodul 11 gemäß Figur 1 weist eine Substratplatte 12 auf, auf deren sichtbarer Oberseite 13 ein Kondensatoraufbau 14 nach einem Verfahren der Oberflächenmontage montiert wurde. Der Kondensatoraufbau weist acht Kondensatoren 15 auf, von denen in Figur 1 jedoch nur sieben dargestellt sind (der rechts oben angeordnete Kondensator fehlt; hierzu im Folgenden noch mehr). Die Kondensatoren 15 weisen jeweils erste Kondensatorelektroden 16 und zweite Kondensatorelektroden 17 auf, wobei die ersten Kondensatorelektroden 16 mit einer ersten Elektrode 18 und die zweiten Kondensatorelektroden 17 mit einer zweiten Elektrode 19 durch nicht näher dargestellte Lötverbindungen oder anderen stoff- oder formschlüssige Verbindungen elektrisch kontaktiert sind. Die erste Elektrode 18 und die zweite Elektrode 19 weisen überdies je eine Kontaktstruktur 20 auf, die mit ihren unteren Seiten an der ersten Elektrode eine erste Anschlussfläche und an der zweiten Elektrode eine zweite Anschlussfläche bilden (in Figur 1 nicht zu erkennen, da der Oberseite 13 zugewandt). Mit der ersten Anschlussfläche und der zweiten Anschlussfläche, die gemeinsam die Montageseite des Kondesatoraufbaus 14 ausbilden, ist dieser auf die Oberseite der Substratplatte 12 mittels einer nicht näher dargestellten Lötverbindung 21 (vgl. Figur 2) montiert.

Die erste Elektrode 18 und die zweite Elektrode 19 bilden gemeinsam eine Haltestruktur für die Kondensatoren 15 aus. Da die Kondensatoren 15 mit ihren ersten Kontaktelektroden 16 und ihren zweiten Kontaktelektroden 17 mit Seitenwänden 22 der ersten Elektrode 18 und zweiten Elektrode 19 verlötet sind, entsteht der selbsttragende Kondensatoraufbau 14, obwohl die erste Elektrode 18 und die zweite Elektrode 19 nicht direkt miteinander verbunden sind. Zusätzliche Stabilität erlangt der Kondensatoraufbau 11 durch Montage auf der Substratplatte 12. Außerdem ist auf Aufnahmestrukturen 23 der ersten Elektrode 18 und der zweiten Elektrode 19 ein Schaltungsträger 24 als zusätzliche Baustruktur befestigt, wobei der Schaltungsträger 24 eine Verbindung zwischen der ersten Elektrode 18 und der zweiten Elektrode 19 herstellt und damit die Haltestruktur stabilisiert.

In der Seitenwand 22 der ersten Elektrode 18 (nicht zu erkennen in Figur 1) und der zweiten Elektrode 19 sind Fenster 28 eingestanzt. Diese eröffnen die Möglichkeit, Zungen 29 in den Innenraum der Haltestruktur hinein zu biegen, die eine Positionierung der Kondensatoren 15 erleichtern und überdies die elektrische Kontaktfläche vergrößern. Da der rechts oben befindliche Kondensator hinter der Seitenwand 22 weggelassen wurde, kann die Zunge 29 dort dargestellt werden. In den anderen Fenstern sind die Zungen von den zweiten Kondensatorelektroden 17 verdeckt.

Auf dem Schaltungsträger 24 ist ein Sensorelement 25a befestigt, wobei es sich beispielsweise um einen Temperatursensor oder einen Beschleunigungssensor (oder Feuchtesensor oder Gassensor) handelt. Über Leiterbahnen 26 auf dem Schaltungsträger 24 ist das Sensorelement 25a mit einer Auswertungsschaltung in Form eines integrierten Schaltkreises 27 verbunden. Der integrierte Schaltkreis 27 kann das Sensorsignal auswerten und in nicht näher dargestellter Weise für eine Weiterverarbeitung zur Verfügung stellen (beispielsweise über nicht dargestellte Leitungsverbindungen oder eine schnurlose Schnittstelle, also über Funk oder Infrarot).

Als weitere Baustruktur sind an den Seitenkanten der Seitenwand 22 Rippen 30 als Versteifungsstruktur hergestellt. Diese können durch Umbiegen der Seitenkanten der Seitenwände 22 erzeugt werden. Die erste Elektrode 18 und die zweite Elektrode 19 können somit kostengünstig als Stanzgitter (Leadframe) durch Stanzen und anschließendes Biegen erzeugt werden. Durch Biegen können auch jeweils die Aufnahmestrukturen 23 und die Kontaktstrukturen 20 hergestellt werden.

In Figur 2 ist dargestellt, wie eine Kontaktierung der Kondensatoranordnung 14 gemäß Figur 1 mit einem als Transistor ausgeführten leistungselektronischen Bauelement 31 erfolgen kann. Zu diesem Zweck ist die Kontaktstruktur 20 über die Lötverbindung 21 mit einem Kontaktpad 32a kontaktiert, wobei das Kontaktpad 32a über eine Durchkontaktierung 33a mit einer Sourceelektrode 34 des leistungselektronischen Bauelements 31 kontaktiert ist. Die Sourceelektrode 34 ist außerdem über eine Leiterbahn 35 mit einem Distanzstück 36 verbunden, welches dieselbe Höhe wie das leistungselektronische Bauelement 31 aufweist.

Eine Drainelektrode 37 des leistungselektronischen Bauelements 31 ist über eine Kontaktfläche 38a und das Distanzstück 36 ist über eine Kontaktfläche 38b mit einem Basisschaltungsträger 39 verbunden. Der Basisschaltungsträger 39 stellt eine Grundplatte zur Verfügung, auf der die ganze elektronische Schaltung, bestehend aus mehreren Leistungsmodulen gemäß Figur 1, montiert ist (vgl. auch Figur 3).

Bei dem leistungselektronischen Bauelement gemäß Figur 2 handelt es sich um einen Transistor. Damit dieser geschaltet werden kann, ist weiterhin eine Gateelektrode 40 notwendig. Damit diese angesteuert werden kann, ist in der Substratplatte 12 eine Durchkontaktierung 33b vorgesehen, die von einem Kontaktpad 32b zu einem Kontaktpad 32c führt. Sourceelektrode 34, Gateelektrode 40, Drainelektrode 37 sowie Fügeschichten 41 am Distanzstück 36 sind als Sinterverbindungen ausgebildet.

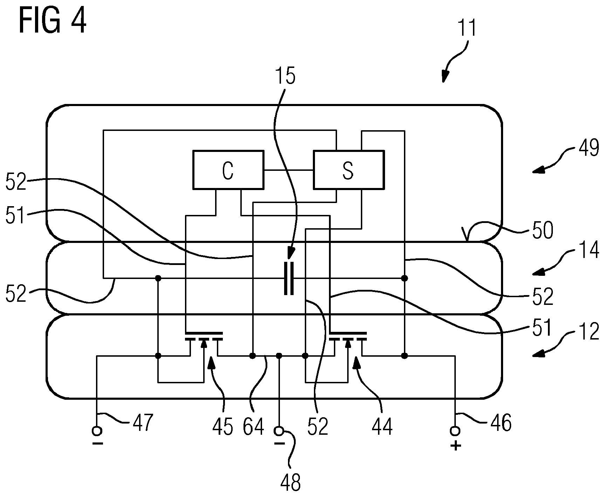

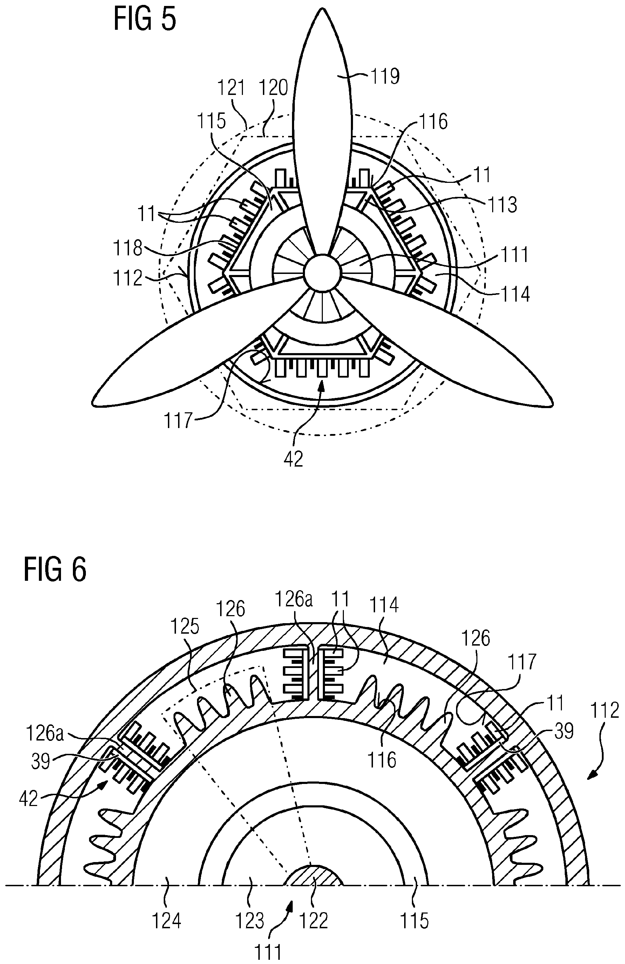

In Figur 3 ist dargestellt, wie mehrere Leistungsmodule 11 auf einem Basisschaltungsträger 39 gemäß Figur 2 zu einer leistungselektronischen Schaltung 42 kombiniert werden können. Fünf Leistungsmodule 11 sind jeweils zu einer Reihe 43 konfiguriert, wobei insgesamt sechs Reihen vorgesehen sind. Wie Figur 2 zu entnehmen ist, ist von der Substratplatte 12 nur die linke Seite dargestellt, wobei die rechte Seite ein weiteres leistungelektronisches Bauelement 31 aufweist (wie in Figur 6 dargestellt). Dies bedeutet, dass auf der nicht dargestellten Seite der Substratplatte gemäß Figur 2 ebenfalls ein Transistor als leistungselektronisches Bauelement verbaut ist. Hieraus ergibt sich eine Kontaktierungsmöglichkeit, die in Figur 3 für jedes Leistungsmodul 11 realisiert ist und in Figur 4 schematisch als Schaltbild dargestellt ist.

In Figur 4 ist der Kondensator 15 als Ersatz für den gesamten Kondensatoraufbau gemäß Figur 1 dargestellt. Dies dient der Vereinfachung der Darstellung, wobei alternativ auch eine Vielzahl parallel geschalteter Kondensatoren zum Einsatz kommen kann. Der Kondensator 15 gemäß Figur 4 wie auch der Kondensatoraufbau 14 ist lediglich schematisch dargestellt. Genauso verhält es sich mit der Substratplatte 12 und den darauf montierten leistungselektronischen Bauelementen, die durch einen ersten Transistor 44 und einen zweiten Transistor 45 ausgebildet sind. Der erste Transistor 44 ist mit seiner Source-Elektrode an den auch als High-Side bezeichneten Pluspol 46 angeschlossen, während der zweite Transistor 45 mit seiner Drain-Elektrode an den auch als Low-Side bezeichneten Minuspol 47 angeschlossen ist. Die Drain-Elektrode des ersten Transistors 44 ist mit der Source-Elektrode des zweiten Transistors 45 sind miteinander verbunden, wobei hierdurch eine Halbbrücke 64 mit einem Phasenkontakt 48 entsteht.

Zur Ansteuerung des Leistungsmoduls 11 ist der Kondensatoraufbau 14 mit einer Treiberschaltung 49 versehen, die gemäß Figur 5 beispielsweise auf einer Oberseite 50 des Kondensatoraufbaus 14 untergebracht sein kann.

Die Treiberschaltung gemäß Figur 4 ist nur schematisch dargestellt, um deren Funktion im Grundsatz zu beschreiben. Die Treiberschaltung weist eine Controllerfunktion C auf sowie eine Sensorfunktion S. Die Controllerfunktion wird durch Kontaktleitungen 51 als Schnittstelle zu den Gate-Elektroden des ersten Transistors 44 und des zweiten Transistors 45 gewährleistet. Damit kann die Treiberschaltung beide Transistoren als Schalter intelligenter ansteuern. Die für diese Funktion notwendigen Informationen werden durch die Sensorfunktion S zur Verfügung gestellt. Die Sensorfunktion wird über Signalleitungen 52 gewährleistet, mit denen ein Stromfluss vor und hinter dem Kondensator 15 sowie vor und hinter dem Phasenkontakt 48 in der Halbbrücke 64 abgegriffen werden kann.

Der Kondensator 15 ist mit dem Pluspol 46 und dem Minuspol 47 verbunden und erfüllt damit eine Glättungsfunktion, die für einen mehrphasigen Betrieb der leistungselektronischen Schaltung 42 gemäß Figur 3 erforderlich ist.

Wie in Figur 3 zu erkennen ist, ist die leistungselektronische Schaltung 42 gemäß Figur 3 modular aufgebaut. Mittels der durch die Leistungsmodule 11 gemäß Figur 4 realisierten Schaltung können diese in drei Gruppen jeweils gemeinsam verwendet werden, um aus einer am gemeinsamen Pluspol 46p und am gemeinsamen Minuspol 47m anliegenden Gleichspannung eine dreiphasige Wechselspannung zu erzeugen, die an den gemeinsamen Phasenkontakten 48a, 48b, 48c abgegriffen werden kann. Die Höhe des zu schaltenden maximalen Stroms bestimmt, wie viele der Leistungsmodule 11 pro Phase zum Einsatz kommen müssen. Gemäß Figur 3 handelt es sich um jeweils zehn Leistungsmodule 11 pro Phase.

Wie zu erkennen ist, sind die Elektroden 53m, 53p des Pluspols 46p und des Minuspols 47m kammartig ausgebildet, so dass jeweils durch die den Pluspol 46p bildende Elektrode 53p jeder erste Transistor 44 jedes Leistungsmoduls 11 und mit der den Minuspol 53m Elektrode 53m jeder zweite Transistor 45 jedes Leistungsmoduls 11 kontaktiert werden kann. Die Phasenkontakte 48a, 48b, 48c sind jeweils mit U-förmigen Elektroden 54a, 54b, 54c verbunden, welche jeweils im mittleren Bereich der Leistungsmodule 11 sowohl den ersten Kondensator 44 als auch den zweiten Kondensator 45 kontaktieren und auf diese Weise jeweils eine der drei Gruppen von je zehn Leistungsmodulen 11 über eine Halbbrücke (64 in Figur 4) kontaktieren. Damit ist für jedes der Leistungsmodule 11 eine Schaltung gemäß Figur 4 realisiert, wobei jede Gruppe von Leistungsmodulen 11 parallel geschaltet ist.

In Figur 5 ist ein elektrischer Antrieb dargestellt, der eine elektrische Maschine 111 aufweist. Diese ist in einer Gehäusestruktur 112 gehalten, wobei hierfür Versteifungsrippen 113 zum Einsatz kommen. Die Gehäusestruktur 112 weist überdies eine ringförmig um die elektrische Maschine 111 angeordnete Kühlkanalstruktur 114 auf, in der die leistungselektronischen Schaltungen 42, bestehend jeweils aus mehreren Leistungsmodulen 11 angeordnet sind. Ein zusätzlicher Kühlkanal 115 ist zwischen der Kühlkanalstruktur 114 und der elektrischen Maschine 111 ausgebildet. In diesem zusätzlichen Kühlkanal 115 verlaufen auch die Versteifungsrippen 113, die eine innere Wand 116 der außen liegenden ringförmigen Kühlkanalstruktur 114 mit der elektrischen Maschine 111 verbinden.

Die Kühlkanalstruktur 114 besteht aus einem Ringraum, der sich zwischen der inneren Wand 116 und einer äußeren Wand 117 erstreckt. Die innere Wand 116 weist im Querschnitt die Form eines regelmäßigen Sechsecks als Polygon 118 auf, so dass ebene Aufnahmeflächen für die Leistungsmodule 11 entstehen. Die innere Wand 16 dient dabei als Schaltungsträger für die realisierte leistungselektronische Schaltung 42, wobei die Leistungsmodule 11 hierzu über nicht näher dargestellte Leiterbahnen kontaktiert sind.

Die Kühlkanalstruktur 114 sowie der zusätzliche Kühlkanal 115 in Figur 5 sind zum Betrachter hin geöffnet. Dadurch kann Luft, welche in Betrachtungsrichtung auf den elektrischen Antrieb zuströmt, ungehindert in die Kühlkanalstruktur 114 und den zusätzlichen Kühlkanal 115 eindringen. Die elektrische Maschine ist ein Propellermotor, auf dessen nicht näher dargestellter Welle ein Propeller 119 für ein elektrisch betriebenes Flugzeug angebracht ist. Damit liegen die zum Betrachter offenen Kanalstrukturen, also die Kühlkanalstruktur 14 und der zusätzliche Kühlkanal 115 in einem nicht näher dargestellten durch den Propeller 119 erzeugten Propellerstrahl, der den Transport von Kühlluft aus der Umgebung fördert.

Für die Kühlkanalstruktur 114 sind, wie in Figur 5 angedeutet, auch andere Gestaltungen möglich. Beispielsweise kann die äußere Wand 117 der Kühlkanalstruktur 114 ebenfalls die Form eines Polygons aufweisen, wie durch die Strichpunktlinie 120 angedeutet ist. In Figur 5 ist dieses Polygon ebenfalls ein regelmäßiges Sechseck, so dass weitere Aufnahmeflächen für nicht dargestellte Leistungsmodule 11 entstehen. Weiter ist mittels der Strichpunktlinien 121 angedeutet, dass der Querschnitt der Kühlkanalstruktur 114 an der Öffnung einen größeren Durchmesser haben kann als im von der Zeichenebene abgewandten Teil, in dem der Auslass für die Kühlkanalstruktur 114 liegt. Hierdurch entsteht eine trichterförmige äußere Wand 117, so dass der Querschnitt der Kühlkanalstruktur 114 von dem dem Betrachter zugewandten Einlass zum Auslass hinter der Zeichenebene abnimmt.

Die elektrische Maschine 111 gemäß Figur 6 weist eine Motorwelle 122 auf, auf der ein nur schematisch dargestellter Rotor 123 befestigt ist. Diesem gegenüber befindet sich ein Stator 124, der an der Wand des zusätzlichen Kühlkanals 115 befestigt ist. Zwischen Rotor und Stator kann Kühlluft gefördert werden, da die ausgebildeten Zwischenräume den zusätzlichen Kühlkanal 115 ergeben (in Figur 6 durch einen Luftspalt 115 zwischen Rotor 123 und Stator 124 angedeutet, wobei dieser nicht maßstäblich dargestellt ist).

Auf der Motorwelle 122 befindet sich als Propeller ein Lüfterrad, von dem eine Schaufel 125 mit einer Strichpunktlinie dargestellt ist. Die Schaufeln 125 des Lüfterrads befördern Luft in Betrachtungsrichtung sowohl in die Kühlkanalstruktur 114 als auch in den zusätzlichen Kühlkanal 115. Die Luft in der Kühlkanalstruktur 114 streicht an Rippen 126 vorbei, die an der inneren Wand 116 ausgebildet sind und dadurch Abwärme von der elektrischen Maschine 111 aufnehmen. Außerdem gibt es Rippen 126a, die die innere Wand 116 mit der äußeren Wand 117 verbinden und die Kühlkanalstruktur 114 daher in einzelne Kühlkanäle mit einem Querschnitt von Kreisringsegmenten unterteilen. An diesen Rippen 126a sind die Basisschaltungsträger 39 befestigt, die als Schaltungsträger für die Leistungsmodule 11 dienen und gemeinsam die leistungselektronische Schaltung 42 für die elektrische Maschine 111 ausbilden. Die Rippen 126a stellen für die Montage der Basisschaltungsträger 39 ebene Aufnahmeflächen zur Verfügung.

## Patentansprüche

1. Elektrischer Antrieb mit einer leistungselektronischen Schaltung (42), an die eine elektrische Maschine (111) angeschlossen ist, und einer Gehäusestruktur, in der eine Kühlkanalstruktur (114) ausgebildet ist,
**dadurch gekennzeichnet,**
**dass** die leistungselektronische Schaltung (42) mehrere Leistungsmodule (11) aufweist, welche in der Kühlkanalstruktur umströmbar für ein in der Kühlkanalstruktur (114) zu führendes Kühlmedium angeordnet sind.

2. Antrieb nach Anspruch 1,
**dadurch gekennzeichnet,**
**dass** die Kühlkanalstruktur (114) offen für Umgebungsluft als Kühlmedium ausgestaltet ist.

3. Antrieb nach einem der voranstehenden Ansprüche,
**dadurch gekennzeichnet,**
**dass** die Kühlkanalstruktur (114) ringförmig mit einer inneren Wand (116) und einer äußeren Wand (117) ausgebildet ist und um die elektrische Maschine (111) herum angeordnet ist.

4. Antrieb nach Anspruch 3,
**dadurch gekennzeichnet,**
**dass** die innere Wand (116) und/oder die äußere Wand (117) der ringförmigen Kühlkanalstruktur (114) ebene Aufnahmeflächen aufweisen und die Leistungsmodule (11) auf den Aufnahmeflächen angeordnet sind.

5. Antrieb nach Anspruch 4,
**dadurch gekennzeichnet,**
**dass** die innere Wand (116) und/oder die äußere Wand (117) im Querschnitt ein die Aufnahmeflächen bildendes Polygon (118) bildet.

6. Antrieb nach Anspruch 3,
**dadurch gekennzeichnet,**
**dass** die ringförmige Kühlkanalstruktur (114) mit radialen Rippen (126a) ausgestattet ist, auf denen die Leistungsmodule (11) angeordnet sind.

7. Antrieb nach Anspruch 6,
**dadurch gekennzeichnet,**
**dass** die Rippen (123a) die ringförmige Kühlkanalstruktur (114) in Kühlkanäle mit Querschnitten in Form von Kreisringsegmenten unterteilt.

8. Antrieb nach einem der Ansprüche 3 bis 7,
**dadurch gekennzeichnet,**
**dass** die elektrische Maschine (111) von der ringförmigen Kühlkanalstruktur (114) umgeben ist.

9. Antrieb nach Anspruch 8,
**dadurch gekennzeichnet,**
**dass** zwischen der elektrischen Maschine (111) und der ringförmigen Kühlkanalstruktur (114) mindestens ein zusätzlicher Kühlkanal (115) für die Kühlung der elektrischen Maschine (111) vorgesehen ist.

10. Antrieb nach einem der voranstehenden Ansprüche,
**dadurch gekennzeichnet,**
**dass** die Kühlkanalstruktur (114) in einem Propellerstrahl eines durch die elektrische Maschine (111) angetriebenen Propellers (119) angeordnet ist.

11. Antrieb nach Anspruch 10,
**dadurch gekennzeichnet,**
**dass** die elektrische Maschine (111) als Propellermotor ausgebildet ist.

12. Antrieb nach einem der voranstehenden Ansprüche,
**dadurch gekennzeichnet,**
**dass** die Kühlkanalstruktur (114) einen sich in Strömungsrichtung des Kühlfluids verjüngenden Kanalquerschnitt aufweist.

13. Antrieb nach einem der voranstehenden Ansprüche,
**dadurch gekennzeichnet,**
**dass** die Leistungsmodule (11) voneinander beanstandet auf einem Basisschaltungsträger (39) montiert sind, wobei der Basisschaltungsträger (39) in der Kühlkanalstruktur (114) befestigt ist.

14. Antrieb nach Anspruch 13,
**dadurch gekennzeichnet,**
**dass** mehrere Basisschaltungsträger (39) mit Leistungsmodulen (11) in der Kühlkanalstruktur verbaut sind.
